# EUROPÄISCHE PATENTSCHRIFT

(11) **EP 4 163 130 B1**
(45) Veröffentlichungstag und Bekanntmachung des Hinweises auf die Patenterteilung: **28.08.2024**
(21) Anmeldenummer: 22198873.6
(22) Anmeldetag: 29.09.2022
(51) Int. Cl.: B60C 11/03, B60C 11/12, B60C 11/01

(54) **FAHRZEUGLUFTREIFEN**
PNEUMATIC TYRE FOR VEHICLES
PNEUMATIQUE POUR VÉHICULE

(30) Priorität: 07.10.2021 DE 102021211351
(43) Veröffentlichungstag der Anmeldung: 12.04.2023
(73) Patentinhaber: Continental Reifen Deutschland GmbH, 30175 Hannover (DE)
(72) Erfinder: Özüduru, Ahmet, 30165 Hannover (DE); Soyyuece, Atakan, 30165 Hannover (DE); Pagac, Lubomir, 30165 Hannover (DE); Jankowski, Morten, 30165 Hannover (DE)
(74) Vertreter: Continental Corporation

(56) Entgegenhaltungen:
- EP-A1- 2 281 698
- EP-A1- 3 695 988
- JP-A- 2009 149 124
- JP-A- 2011 178 213
- US-A1- 2009 272 474
- US-A1- 2010 263 775
- US-A1- 2017 050 471
- US-A1- 2017 253 087
- US-A1- 2019 135 044
- US-A1- 2020 164 693

## Beschreibung

Die Erfindung betrifft einen Fahrzeugluftreifen mit einem Laufstreifen mit zumindest einer schulterseitigen Profilrippe, welche durch eine auf Profiltiefe ausgeführte schulterseitige Umfangsrille begrenzt ist und sich aus einem innerhalb der Bodenaufstandsfläche verlaufenden Innenabschnitt und einen außerhalb der Bodenaufstandsfläche verlaufenden Außenabschnitt zusammensetzt, wobei in der schulterseitigen Profilrippe zumindest Großteils im Außenabschnitt verlaufende Querrillen mit einer in Umfangsrichtung ermittelten maximalen Breite von 2,0 mm bis 10,0 mm ausgebildet sind, wobei im Innenabschnitt eine in Draufsicht gerade sowie in Umfangsrichtung umlaufende Umfangsnut mit einer Breite von 0,5 mm bis 5,0 mm verläuft und wobei im Bereich zwischen in Umfangsrichtung benachbarten Querrillen jeweils ein in die Umfangsnut einmündender Einschnitt mit einer Breite von 0,4 mm bis 2,0 mm verläuft.

Ein derartiger Fahrzeugluftreifen ist beispielsweise aus der JP 2009 149 124 A bekannt. Dieser Fahrzeugluftreifen weist einen Laufstreifen mit einer schulterseitigen Profilrippe auf, welche mit Querrillen versehen ist, wobei die Querrillen zumindest großteils im außerhalb der Bodenaufstandsfläche liegenden Außenabschnitt der Profilrippe verlaufen und eine Breite von beispielsweise 5,2 mm aufweisen. Im innerhalb der Bodenaufstandsfläche liegenden Innenabschnitt der schulterseitigen Profilrippe ist eine gerade in Umfangsrichtung umlaufende Umfangsnut mit einer Breite von 1,5 mm bis 3,0 mm ausgebildet. Zwischen in Umfangsrichtung benachbarten Querrillen befindet sich jeweils ein in die Umfangsnut einmündender Einschnitt mit einer Breite von kleiner 1,0 mm. Der Fahrzeugluftreifen soll ein hohes Wasserdrainagevermögen und gute Fahreigenschaften bei Geradeausfahrt aufweisen.

Aus der EP 2 281 698 A1 ist ein Fahrzeugluftreifen mit einem Laufstreifen mit zwei schulterseitigen Profilrippen bekannt, welche durch auf Profiltiefe ausgeführte schulterseitige Umfangsrillen begrenzt sind. In den Außenabschnitten der Profilrippen sind jeweils ausschließlich im Außenabschnitt verlaufende Querrillen ausgebildet und in den Innenabschnitten der Profilrippen ist jeweils eine Umfangsnut mit einer Breite von 1,8 mm bis 3,5 mm, bevorzugt von 1,5 mm bis 3,2 mm, und einer Tiefe von 50 % bis 70 %, insbesondere von 55 % bis 65 %, der Profiltiefe, welche 7,0 mm bis 9,0 mm beträgt, ausgebildet. Zwischen in Umfangsrichtung benachbarten Querrillen ist jeweils ein in die Umfangsnut einmündender Einschnitt mit einer Breite von 0,5 mm bis 1,5 mm, insbesondere von 0,7 mm bis 1,3 mm, ausgebildet. Der Reifen soll eine gute Nässeperformance und ein geringes Abrollgeräusch aufweisen.

Laufstreifen von Fahrzeugluftreifen der eingangs genannten Art weisen zusammengefasst in zumindest einer schulterseitigen Profilrippe im Innenabschnitt eine schmale Umfangsnut, im Schulterabschnitt Querrillen und zwischen den Querrillen in die schmale Umfangsnut einmündende Einschnitte auf. Die Umfangsnut im Innenabschnitt befindet sich bei üblichen Fahrmanövern innerhalb der Bodenaufstandsfläche, wobei sich die Bodenaufstandsfläche bekannter Weise kurzzeitig ändern kann, insbesondere kommt es beim Fahren von Kurven zu einer Verschiebung der Bodenaufstandsfläche und beim Bremsen zu einer kurzzeitigen Verbreiterung der Bodenaufstandsfläche. Die schmale Umfangnut entkoppelt einen schmalen, an die schulterseitige Umfangsrille angrenzenden Umfangsabschnitt der schulterseitigen Profilrippe von der sonstigen Profilrippe. Dieser Umfangsabschnitt ist üblicherweise nur geringfügig mit Profilnegativen strukturiert und wird in Fachkreisen auch als "Handlingrippe" bezeichnet, da er aufgrund seiner hohen Steifigkeit für die Handlingeigenschaften des Reifens günstig ist. Die Umfangsnut, die Querrillen und die Einschnitte ermöglichen eine Entwässerung des Laufstreifens beim Fahren auf nasser Fahrbahn, wobei die Umfangsnut beim Auftreten von Querkräften ferner einen für die Fahreigenschaften auf nasser Fahrbahn günstigen "Wischeffekt" zeigt.

Insbesondere bei Fahrzeugen mit erhöht liegendem Schwerpunkt, beispielsweise SUVs, Vans oder Light-Trucks, besteht beim Fahren von Kurven mit hoher Geschwindigkeit, beispielsweise beim Befahren von Autobahnausfahrten, die Gefahr, dass die Fahrzeuge geringfügig zur Seite kippen, wodurch die Reifen keinen optimalen Kontakt zur Fahrbahn aufweisen und die Unfallgefahr erhöht ist.

Der Erfindung liegt daher die Aufgabe zugrunde, bei einem Fahrzeugluftreifen der eingangs genannten Art, insbesondere beim Einsatz des Fahrzeugluftreifens auf einem SUV, einem Van oder einem Light-Truck, den Reifen-Fahrbahn-Kontakt bei Kurvenfahrt und derart die Handlingeigenschaften beim Fahren von Kurven zu verbessern.

Gelöst wird die gestellte Aufgabe erfindungsgemäß dadurch, dass die Einschnitte eine maximale Tiefe von 70 % bis 100 % der Profiltiefe aufweisen, wobei zwischen jedem Einschnitt und einer benachbarten Querrille jeweils ein in Draufsicht zur Umfangsrichtung unter einem Winkel von 5° bis 20° verlaufender Mikroeinschnitt mit einer Tiefe von 0,5 mm bis 50 % der Profiltiefe und einer Breite von 0,4 mm bis 2,0 mm ausgebildet ist, wobei sich die Enden des Mikroeinschnitts innerhalb eines quer zur Umfangsrichtung ermittelten Abstandes von bis zu 10,0 mm vom seitlichen Rand der Bodenaufstandsfläche befinden.

Mittels der Mikroeinschnitte wird die schulterseitige Profilrippe in lateraler Richtung zusätzlich segmentiert. Durch die gebildeten Rippensegmente ist die im Bereich der schulterseitigen Profilrippe quer zur Umfangsrichtung (laterale Richtung) auftretende Haftreibung bei in lateraler Richtung auftretenden Kräften, also beim Fahren von Kurven, insbesondere mit entsprechend hoher Geschwindigkeit, reduziert. Die Rippensegmente rutschen unter der Einwirkung lateraler Kräfte - gegenüber in lateraler Richtung einschnittfreien, ansonsten vergleichbaren Profilstrukturen, wie etwa aus der EP 2 281 698 A1 bekannt - somit leichter über die Fahrbahn, wodurch sich die Rippensegmente beim Fahren von Kurven und einer damit verbundenen leichten Kippbewegung des Fahrzeuges weniger stark vom Untergrund abheben und derart der Reifen-Fahrbahn-Kontakt bei Fahren von Kurven und somit die Handlingeigenschaften beim Fahren von Kurven deutlich verbessert sind.

Gemäß einer bevorzugten Ausführung gehören zu den Mikroeinschnitten Mikroeinschnitte, welche abschnittsweise im Innenabschnitt und abschnittsweise im Außenabschnitt verlaufen. Durch solche Mikroeinschnitte ist der Reifen-Fahrbahn-Kontakt bei Fahren von Kurven weiter verbessert.

Gemäß einer ersten vorteilhaften Variante der genannten bevorzugten Ausführung gehören zu den Mikroeinschnitten Mikroeinschnitte, welche im Innenabschnitt an die Querrille und im Außenabschnitt an den Einschnitt anschließen.

Gemäß einer zweiten vorteilhaften Variante der genannten bevorzugten Ausführung gehören zu den Mikroeinschnitten Mikroeinschnitte, welche im Innenabschnitt an den Einschnitt und im Außenabschnitt an die Querrille anschließen.

Eine weitere bevorzugte Ausführung ist dadurch gekennzeichnet, dass zu den Mikroeinschnitten Mikroeinschnitte gehören, welche ausschließlich im Innenabschnitt oder ausschließlich im Außenabschnitt verlaufen.

Bevorzugter Weise beträgt der Winkel, unter welchem die Mikroeinschnitte in Draufsicht zur Umfangsrichtung verlaufen, 10° bis 15°. Die derart gebildeten Rippensegmente sorgen dafür, dass die erwähnte Haftreibung bei in lateraler Richtung auftretenden Kräften, also beim Fahren von Kurven, auf eine für den Reifen-Fahrbahn-Kontakt besonders vorteilhafte Weise reduziert ist. Die Handlingeigenschaften beim Fahren von Kurven sind somit weiter verbessert.

Gemäß einer weiteren bevorzugten Ausführung verlaufen die Mikroeinschnitte, betrachtet in Draufsicht auf den Laufstreifen mit waagrecht ausgerichteter Reifenachse, rechtssteigend. Dies ist in Ländern mit Rechtsverkehr besonders vorteilhaft, in welchen Autobahnabfahrten häufig Rechtskurven sind bzw. solche umfassen, da vor allem bei Autobahnabfahrten Kurven mit hoher Geschwindigkeit gefahren werden und beim Fahren von solchen ein guter Reifen-Fahrbahn-Kontakt für die Handlingeigenschaften besonders wichtig ist.

Bevorzugter Weise gehören zu den Mikroeinschnitten Mikroeinschnitte , welche in Draufsicht betrachtet, gerade verlaufen. Dies trägt beim Fahren von Kurven zu einer vorteilhaften Reduktion der quer zur Umfangsrichtung (laterale Richtung) auftretenden Haftreibung im Bereich der schulterseitigen Profilrippe bei und ist somit ebenfalls für den Reifen-Fahrbahn-Kontakt günstig.

Eine weitere bevorzugte Ausführung ist dadurch gekennzeichnet, dass die Tiefe der Mikroeinschnitte 0,7 mm bis 2,0 mm, insbesondere 0,8 mm bis 1,2 mm, beträgt und/oder dass die Breite der Mikroeinschnitte 0,8 mm bis 1,2 mm beträgt.

Gemäß einer weiteren bevorzugten Ausführung sind weitere, insbesondere gerade verlaufende, Mikroeinschnitte mit einer Tiefe von 2,0 mm bis 4,0 mm und einer Breite von 0,4 mm bis 2,0 mm, insbesondere von 0,8 mm bis 1,2 mm, vorgesehen, welche zwischen der Umfangsnut und der schulterseitigen Umfangsrille verlaufen, wobei die Mikroeinschnitte gegenüberliegend zu den Einschnitten in die Zusatznut einmünden und vorzugsweise in geradliniger Verlängerung der Einschnitte verlaufen. Die sogenannte Handlingrippe ist somit mit Mikroeinschnitten strukturiert, wodurch sich diese beim Abplatten des Laufstreifens besser an die Fahrbahn anschmiegt und der Reifen-Fahrbahn-Kontakt, insbesondere auch beim Fahren von Kurven, weiter verbessert ist.

Eine weitere bevorzugten Ausführung ist dadurch gekennzeichnet, dass die in der schulterseitigen Profilrippe des Laufstreifens verlaufenden Querrillen jeweils einen Rillengrund und eine laufstreifeninnenseitig an den Rillengrund anschließende und in Fortsetzung zu diesem zur Rippenaußenfläche verlaufende Endflanke aufweisen, wobei zwischen den Endflanken der Querrillen und der Umfangsnut verlaufende, weitere Einschnitte mit einer Breite von 0,4 mm bis 2,0 mm, insbesondere von 0,8 mm bis 1,2 mm, und einer maximalen Tiefe von 70 % bis 100 % der Profiltiefe verlaufen, wobei die Einschnitte, in Draufsicht betrachtet, zur Umfangsrichtung bevorzugt unter Winkel von 60° bis 80°, insbesondere von 65° bis 75°, verlaufen. Auch solche Einschnitte sind für die Handlingeigenschaften günstig.

Eine weitere bevorzugte Ausführung ist dadurch gekennzeichnet, dass sich die Einschnitte, welche im Bereich zwischen in Umfangsrichtung benachbarten Querrillen in die Umfangsnut einmünden, in Draufsicht betrachtet, jeweils aus
- einem gerade, komplett innerhalb des Innenabschnittes sowie zur Umfangsrichtung unter einem Winkel von 60° bis 80°, insbesondere von 65° bis 75°, verlaufenden, innenseitigen Einschnittabschnitt und
- einem gerade, Großteils im Außenabschnitt sowie zur Umfangsrichtung unter einem Winkel von 75° bis 90°, insbesondere von zumindest 80°, bevorzugt von zumindest 85°, verlaufenden, in den Innenabschnitt hineinragenden, außenseitigen Einschnittabschnitt zusammensetzen,
- wobei der außenseitigen Einschnittabschnitt bezüglich der Umfangsrichtung vorzugsweise gegensinnig zum innenseitigen Einschnittabschnitt geneigt ist
- und wobei die Mikroeinschnitte, welche zwischen einem Einschnitt und einer benachbarten Querrille ausgebildet sind, vorzugsweise in den außenseitigen Einschnittabschnitt einmünden.

Durch die zwei Einschnittabschnitte zeigen die Einschnitte einen für die Nässeperformance vorteilhaften Wischeffekt, welcher sowohl in Umfangsrichtung als auch quer zur Umfangsrichtung auftritt.

Bei der letztgenannten bevorzugten Ausführung ist es von weiterem Vorteil, wenn der innenseitige Einschnittabschnitt mit dem außenseitigen Einschnittabschnitt einen Winkel von 140° bis 170°, insbesondere von 155° bis 165°, einschließt, wobei dieser Winkel vorzugsweise an der dem Mikroeinschnitt abgewandten Seite des Einschnittes liegt. Wenn der Winkel an der dem Mikroeinschnitt abgewandten Seite des Einschnittes liegt, ist im Bereich der gebildeten Rippensegmente die auftretende Haftreibung bei in lateraler Richtung auftretenden Kräften, also beim Fahren von Kurven, auf eine für den Reifen-Fahrbahnkontakt besonders vorteilhaft reduziert.

Ferner ist es bei der letztgenannten bevorzugten Ausführung von Vorteil, wenn der innenseitige Einschnittabschnitt vor dem seitlichen Rand der Bodenaufstandsfläche in einem axialer Richtung ermittelten Abstand von 0,5 mm bis 5,0 mm, insbesondere von bis zu 2,0 mm, endet.

Gemäß einer weiteren bevorzugten Ausführung weisen die Einschnitte, welche im Bereich zwischen in Umfangsrichtung benachbarten Querrillen in die Umfangsnut einmünden, zu den Querrillen jeweils einen in Umfangsrichtung als kleinstmöglichen Abstand ermittelten Abstand von 40 % bis 60 %, insbesondere von 45 % bis 55 %, des zwischen den Querrillen in Umfangsrichtung als kleinstmöglichen Abstand ermittelten Abstandes auf. Dies trägt zu einer gleichmäßigen Reduktion der erwähnten Haftreibung bei.

Weitere Merkmale, Vorteile und Einzelheiten der Erfindung werden nun anhand der Zeichnung, die schematisch ein Ausführungsbeispiel der Erfindung zeigt, näher erläutert. Dabei zeigen
Fig. 1 eine vereinfachte Draufsicht auf einen in die Ebene abgewickelten Umfangsabschnitt eines Laufstreifens eines Fahrzeugluftreifens mit einer Ausführungsvariante der Erfindung,
Fig. 2 eine vergrößerte Draufsicht auf das Detail Z₂ der Fig. 1,
Fig. 3 einen Schnitt entlang der Linie III-III der Fig. 2,
Fig. 4 einen Schnitt entlang der Linie IV-IV der Fig. 2 und
Fig. 5 einen Schnitt entlang der Linie V-V der Fig. 2.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Kleintransporter mit zGM ≤ 3,5 t, Leichte LKWs mit zGM ≤ 7,5 t), wobei die Reifen zum Fahren unter winterlichen Fahrbedingungen vorgesehen sind.

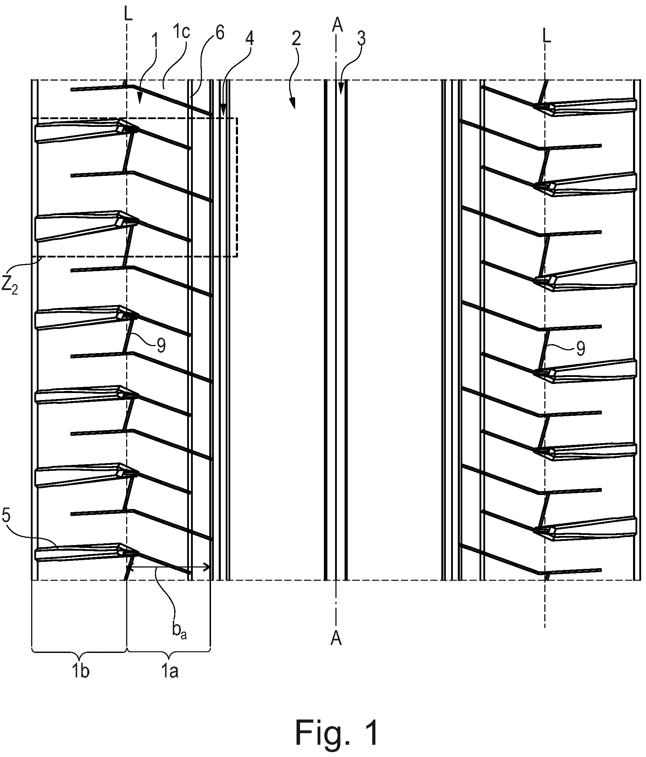

Fig. 1 zeigt eine Draufsicht auf einen Umfangsabschnitt eines in die Ebene abgewickelten Laufstreifens eines Fahrzeugluftreifens. Die seitlichen Ränder der Bodenaufstandsfläche des Laufstreifens sind durch Linien L und die Reifenäquatorialebene ist durch eine Linie A-A angedeutet. Die Bodenaufstandsfläche entspricht dem statisch ermittelten Footprint gemäß E.T.R.T.O.-Standards (Last bei 70 % der maximalen Tragfähigkeit bei einem Innendruck von 85 % nach E.T.R.T.O.-Norm).

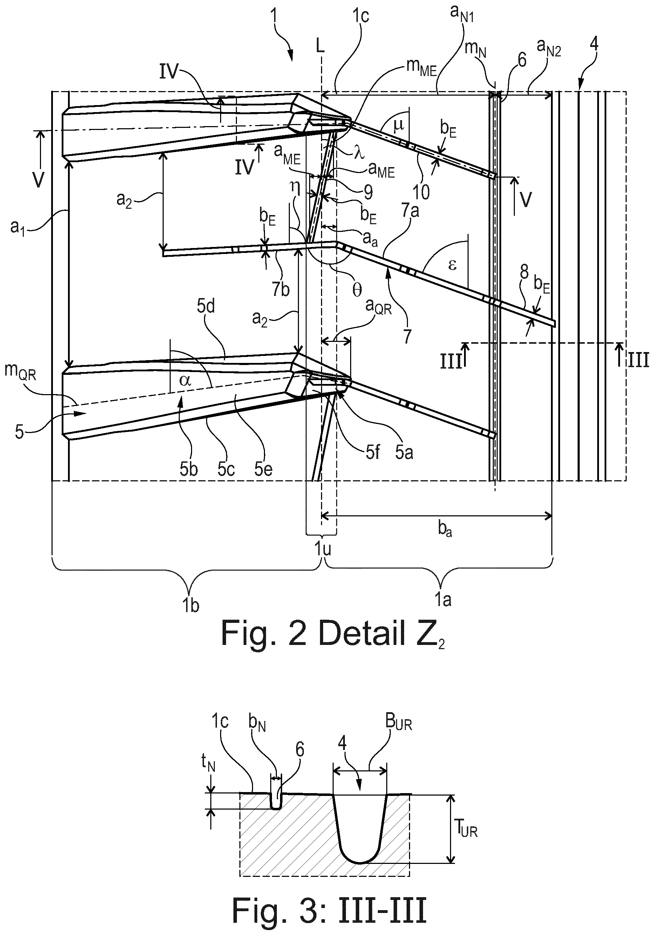

Der Laufstreifen weist zwei schulterseitige Profilrippen 1 und zwei mittlere Profilrippen 2 auf, wobei die mittleren Profilrippen 2 durch eine zentrale Umfangsrille 3 und die schulterseitigen Profilrippen 1 zu den mittleren Profilrippen 2 durch schulterseitige Umfangsrillen 4 getrennt sind. Die Umfangsrillen 3, 4 verlaufen in Draufsicht gerade und sind in radialer Richtung auf die jeweils vorgesehene Profiltiefe T_{UR} (Fig. 3, gezeigt für eine schulterseitige Umfangsrille 4) ausgeführt, welche für den bevorzugten Reifentyp üblicherweise 6,5 mm bis 13,0 mm beträgt, und weisen an der Laufstreifenperipherie in axialer Richtung eine Breite B_{UR} (Fig. 3) von insbesondere 6,0 mm bis 13,0 mm auf. Die mittleren Profilrippen 2 sind lediglich schematisch dargestellt und können in an sich bekannter Weise mit Rillen, Einschnitten und dergleichen strukturiert sein. Die Ausgestaltung der schulterseitigen Profilrippen 1, auf welche noch genauer eingegangen wird, ist beim Ausführungsbeispiel derart, dass der Laufstreifen bezüglich der Reifenäquatorialebene (Linie A-A) eine asymmetrische Gestalt aufweist, wobei die eine schulterseitige Profilrippe 1 durch eine 180°-Drehung in die andere Profilrippe 1 überführbar ist. Bevorzugter Weise sind die mittleren Profilrippen 2 in analoger Weise zu den schulterseitigen Profilrippen 1 asymmetrisch ausgeführt, sodass der Fahrzeugluftreifen keine bevorzugte Orientierung auf der Reifenachse aufweist.

Jede schulterseitige Profilrippe 1 weist eine in der Laufstreifenperipherie liegende Rippenaußenfläche 1c, einen innerhalb der Bodenaufstandsfläche verlaufenden Innenabschnitt 1a mit einer am Niveau der Rippenaußenfläche 1c in axialer Richtung ermittelten Breite bₐ und einen außerhalb der Bodenaufstandsfläche verlaufenden Außenabschnitt 1b auf.

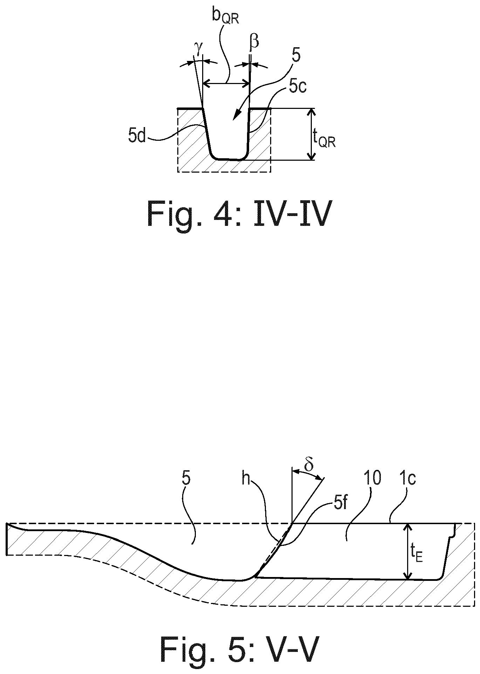

Der Außenabschnitt 1b ist mit einer Vielzahl von in Draufsicht parallel zueinander verlaufenden Querrillen 5 versehen, welche - wie Fig. 2 zeigt - bezogen auf dem Rillenverlauf folgende Rillenmittellinien m_{QR} - zur Umfangsrichtung unter einem Winkel α bis 75° bis 90°, insbesondere von höchstens 85°, verlaufen, wobei die Querrillen 5 entweder innerhalb des Außenabschnitts 1b enden oder - wie beim Ausführungsbeispiel gezeigt - in den Innenabschnitt 1a hineinragen und wobei sich die der schulterseitigen Umfangsrille 4 zugewandten Enden der Querrillen 5 in axialer Richtung innerhalb eines Abstandes a_{QR} von bis zu 5,0 mm vom seitlichen Rand der Bodenaufstandsfläche (Linie L) befinden. Aufeinanderfolgende Querrillen 5 weisen voneinander in Umfangsrichtung als kleinstmögliche Abstände ermittelte Abstände a₁ von vorzugsweise 20,0 mm bis 35,0 mm auf. Die Querrillen 5 weisen in radialer Richtung jeweils eine maximale Tiefe t_{QR} (Fig. 4) von 70 % bis 100 % der Profiltiefe T_{UR} (Fig. 3) und an der Rippenaußenfläche 1c in Umfangsrichtung eine maximale Breite b_{QR} (Fig. 4) von 2,0 mm bis 10,0 mm, insbesondere von 3,0 mm bis 6,0 mm, auf.

Jede Querrille 5 setzt sich, in Draufsicht betrachtet, aus einem komplett innerhalb des Außenabschnittes 1b verlaufenden Rillenabschnitt 5b und einem in Richtung zur Laufstreifeninnenseite auslaufenden, abschnittsweise im Außenabschnitt 1b und abschnittsweise im Innenabschnitt 1a verlaufenden Rillenabschnitt 5a zusammen. Jede Querrille 5 ist durch eine Rillenflanke 5c, eine am Übergang des Rillenabschnittes 5a zum Rillenabschnitt 5b in Richtung zur Rillenflanke 5c hin geknickten Rillenflanke 5d, einem ausschließlich im Rillenabschnitt 5b ausgebildeten Rillengrund 5e und einem in Verlängerung des Rillengrundes 5e sowie ausschließlich im Rillenabschnitt 5a verlaufenden Endflanke 5f (vergl. Fig. 5) begrenzt.

Wie Fig. 4 zeigt, verläuft die Rillenflanke 5c, im in Umfangsrichtung ausgerichteten Querschnitt betrachtet (vergl. Lage der Schnittlinie IV-IV in Fig. 2), zur radialen Richtung unter einem Winkel β von bis zu 5°. Die Rillenflanke 5d verläuft, im in Umfangsrichtung ausgerichteten Querschnitt betrachtet, zur radialen Richtung unter einem Winkel γ von 8° bis 12°. Gemäß Fig. 5 verläuft die Endflanke 5f zur Rippenaußenfläche 1c sowie, im Längsschnitt betrachtet (vergl. Lage der Schnittlinie V-V in Fig. 2), durchgehend gebogen, also kreisbogenförmig, wobei die Biegung derart ist, dass eine die Enden der Endflanke 5f verbindende Hilfslinie h radial außerhalb der Endflanke 5f liegt und wobei die Endflanke 5f - bezogen auf die Hilfslinie h - zur radialen Richtung unter einem Winkel δ von 30° bis 40° verläuft.

Wie Fig. 1 ferner zeigt, ist im Innenabschnitt 1a jeder schulterseitigen Profilrippe 1 jeweils eine in Draufsicht gerade sowie in Umfangsrichtung umlaufende Umfangsnut 6 ausgebildet, welche gemäß Fig. 2 - bezogen auf ihre Nutmittellinie m_{N} - zum jeweiligen seitlichen Rand der Bodenaufstandsfläche (Linie L) einen an der Rippenaußenfläche 1c in axialer Richtung ermittelten Abstand a_{N1} von 50 % bis 90 %, insbesondere von 65 % bis 85 %, bevorzugt von 75 % bis 85 %, der Breite bₐ des Innenabschnittes 1a und zur schulterseitigen Umfangsrille 4 einen an der Rippenaußenfläche 1c in axialer Richtung ermittelten Abstand a_{N2} von vorzugsweise zumindest 2,0 mm aufweist. Gemäß Fig. 3 weist die Umfangsnut 6 einen flach U-förmigen Querschnitt, an der Rippenaußenfläche 1c eine in axialer Richtung ermittelte Breite b_{N} von 0,5 mm bis 5,0 mm, insbesondere von 1,0 mm bis 3,0 mm und in radialer Richtung eine Tiefe t_{N} von 1,5 mm bis 2,5 mm, insbesondere von 1,8 mm bis 2,2 mm, auf.

Gemäß Fig. 2 ist die schulterseitige Profilrippe 1 im Bereich zwischen aufeinanderfolgenden Querrillen 5 jeweils mit einem in die Umfangsnut 6 einmündenden, über die Bodenaufstandsfläche (Linie L) hinausverlaufenen, einfach geknickten, daher flach V-förmig verlaufenden Einschnitt 7, einem zwischen der Umfangsnut 6 und der schulterseitigen Umfangsrille 4 verlaufenden Mikroeinschnitt 8 und einem zwischen dem Einschnitt 7 und einer Querrille 5 verlaufenden Mikroeinschnitt 9 versehen. Ferner ist zwischen jeder Querrille 5 und der Umfangsnut 6 ein Einschnitt 10 ausgebildet. Wie noch genauer erläutert wird, sind die Mikroeinschnitte 8, 9 vorzugsweise seichter als die Einschnitt 7, 10 ausgeführt. Die Einschnitte 7, 10 und die Mikroeinschnitte 8, 9 weisen jeweils zwei in radialer Richtung verlaufende Einschnittwände und eine als kleinstmöglicher Abstand zwischen den Einschnittwänden ermittelte, konstante Breite b_{E} von 0,4 mm bis 2,0 mm, insbesondere von 0,8 mm bis 1,2 mm, auf, wobei die Breiten b_{E} beim Ausführungsbeispiel übereinstimmende Größen aufweisen.

Der Einschnitt 7 setzt sich aus einem in Draufsicht gerade sowie komplett innerhalb des Innenabschnittes 1a verlaufenden, innenseitigen Einschnittabschnitt 7a und einem in Draufsicht gerade sowie Großteils im Außenabschnitt 1b verlaufenden, in den Innenabschnitt 1a hineinragenden, außenseitigen Einschnittabschnitt 7b zusammen.

Der innenseitige Einschnittabschnitt 7a verläuft, in Draufsicht betrachtet, gerade sowie zur Umfangsrichtung unter einem Winkel ε von 60° bis 80°, insbesondere von 65° bis 75°, ist beim Ausführungsbeispiel bezüglich der Umfangsrichtung gegensinnig zu den Querrillen 5 geneigt und endet vor dem seitlichen Rand der Bodenaufstandsfläche (Linie L) in einem auf die nicht gezeigte Einschnittmittellinie bezogenen, in axialer Richtung ermittelten Abstand aₐ von 0,5 mm bis 5,0 mm, insbesondere von bis zu 2,0 mm. Der außenseitige Einschnittabschnitt 7b verläuft, in Draufsicht betrachtet, gerade sowie zur Umfangsrichtung unter einem Winkel η von 75° bis 90°, insbesondere von zumindest 80°, bevorzugt von zumindest 85°, und ist bei einem von 90° abweichenden Winkel bezüglicher der Umfangsrichtung gegensinnig zum innenseitigen Einschnittabschnitt 7a geneigt. Der Winkel ε und der Winkel η sind vorzugsweise derart aufeinander abgestimmt, dass der innenseitige Einschnittabschnitt 7a mit dem außenseitigen Einschnittabschnitt 7b an der Knickinnenseite des Einschnittes 7 einen Winkel θ von 140° bis 170°, insbesondere von 155° bis 165°, einschließt. Die Knickinnenseite ist somit jene Seite, an welcher der von den Einschnittabschnitten 7a, 7b eingeschlossene Winkel kleiner als 180° ist.

Der Einschnitt 7 weist in radialer Richtung eine maximale Tiefe (Tiefe an der tiefsten Stelle) von 70 % bis 100 % der Profiltiefe T_{UR} (Fig. 3) auf, wobei die maximale Tiefe vorzugsweise um zumindest 1,0 mm, insbesondere um zumindest 1,5 mm, kleiner ist als die Profiltiefe T_{UR} (Fig. 3). Der innenseitige Einschnittabschnitt 7a reicht zumindest abschnittsweise, insbesondere über den Großteil seiner Erstreckung, auf die erwähnte maximale Tiefe. Der außenseitige Einschnittabschnitt 7b ist insbesondere in bekannter Weise zumindest abschnittsweise seichter ausgeführt als der innenseitige Einschnittabschnitt 7a. Der außenseitige Einschnittabschnitt 7b weist an der Rippenaußenfläche 1c zu den nächstliegenden Querrillen 5 jeweils einen in Umfangsrichtung als kleinstmöglichen Abstand ermittelten Abstand a₂ von 40 % bis 60 %, insbesondere von 45 % bis 55 %, des erwähnten, zwischen den Querrillen 5 vorliegenden Abstandes a₁ auf.

Der Mikroeinschnitt 8 verläuft in Draufsicht gerade sowie in geradliniger Verlängerung des innenseitigen Einschnittabschnittes 7a und weist in radialer Richtung eine konstante Tiefe von 2,0 mm bis 4,0 mm auf, wobei die Tiefe vorzugsweise derart gewählt ist, dass diese 20 % bis 35 % der Profiltiefe T_{UR} beträgt.

Der Mikroeinschnitt 9 mündet an der über die Knickaußenseite des Einschnittes 7 verlaufende Einschnittwand in den außenseitigen Einschnittabschnitt 7b ein, mündet daher an der dem Winkel θ abgewandten Seite Einschnittes 7 ein, und verläuft zum Rillenabschnitt 5a der entsprechenden Querrille 5, wobei der Mikroeinschnitt 9 beim Ausführungsbeispiel im Innenabschnitt 1a an den Rillenabschnitt 5a und im Außenabschnitt 1b an den außenseitigen Einschnittabschnitt 7b anschließt. Der Mikroeinschnitt 9 verläuft, in Draufsicht betrachtet, gerade sowie zur Umfangsrichtung unter einem Winkel λ von 5° bis 20°, insbesondere von 10° bis 15°, ist bezüglich der Umfangsrichtung gegensinnig zum innenseitigen Einschnittabschnitt 7a geneigt und weist in radialer Richtung eine konstante Tiefe von 0,5 mm bis 50 % der Profiltiefe T_{UR}, bevorzugt von 0,7 mm bis 2,0 mm, besonders bevorzugt von 0,8 mm bis 1,2 mm, auf. Die Enden des Mikroeinschnittes 9 befinden sich - bezogen auf die Mikroeinschnittmittellinie m_{ME} - innerhalb von quer zur Umfangsrichtung ermittelten Abständen a_{ME} von bis zu 10,0 mm vom seitlichen Rand (Linie l) der Bodenaufstandsfläche. Jeder Mikroeinschnitt 9 befindet sich daher innerhalb eines umlaufenden Abschnittes 1u der schulterseitigen Profilrippe 1. Der Mikroeinschnitt 9 verläuft, betrachtet in Draufsicht auf den Laufstreifen und waagrecht ausgerichteter Reifenachse, rechtsteigend (vergl. Fig. 1), also von links unten nach rechts oben.

Der Einschnitt 10 mündet über die Endflanke 5f in die Querrille 5 ein (vergl. Fig. 5), verläuft zur Umfangsrichtung unter einem Winkel µ von 60° bis 80°, insbesondere von 65° bis 75°, ist beim Ausführungsbeispiel in Draufsicht parallel zum innenseitigen Einschnittabschnitt 7a ausgerichtet und weist in radialer Richtung eine maximale Tiefe t_{E} (Tiefe an der tiefsten Stelle, vergl. Fig. 5) von 70 % bis 100 % der Profiltiefe T_{UR} (Fig. 3) auf, wobei die maximale Tiefe t_{E} vorzugsweise um zumindest 1,0 mm, insbesondere um zumindest 1,5 mm, kleiner ist als die Profiltiefe T_{UR}.

Die Erfindung ist auf das beschriebene Ausführungsbeispiel nicht beschränkt.

Zumindest eine schulterseitige Profilrippe ist gemäß der Erfindung ausgeführt. Die Einschnitte 10 und die Mikroeinschnitte 8 sind optional. Die Einschnitte 7 können zwischen der Umfangsnut 6 und dem Mikroeinschnitten 9 verlaufen, sodass die Einschnitte 7 an den Mikroeinschnitten 9 enden. Die Einschnitte 7 können auch nur aus einem einzigen Einschnittabschnitt gebildet sein. Die Querrillen 5 können ebenfalls nur aus einem einzigen Rillenabschnitt gebildet sein. Die Mikroeinschnitte 8, 9, die Einschnittabschnitte 7a, 7b bzw. der Einschnitt 7 sowie der Einschnitt 10 können in Draufsicht insbesondere jeweils durchgehend gebogen (kreisbogenförmig) verlaufen, wobei die angegebenen Winkel bei solchen Einschnitten jeweils bezüglicher einer die Enden der Einschnittmittellinie verbindenden geraden Linie ermittelt sind, wobei die Einschnittmittellinie in Draufsicht dem Eischnittverlauf folgt.

### Bezugszeichenliste

- 1: schulterseitige Profilrippe
- 1a: Innenabschnitt
- 1b: Außenabschnitt
- 1c: Rippenaußenfläche
- 1u: umlaufender Abschnitt
- 2: mittlere Profilrippe
- 3: zentrale Umfangsrille
- 4: schulterseitige Umfangsrille
- 5: Querrille
- 5a, 5b: Rillenabschnitt
- 5c, 5d: Rillenflanke
- 5e: Rillengrund
- 5f: Endflanke
- 6: Umfangsnut
- 7: Einschnitt
- 7a: innenseitiger Einschnittabschnitt
- 7b: außenseitiger Einschnittabschnitt
- 8: Mikroeinschnitt
- 9: Mikroeinschnitt
- 10: Einschnitt
- A-A: Linie (Reifenäquatorialebene)
- aₐ, a₁, a₂, a_{ME}, a_{N1}, a_{N2}, a_{QR}: .....Abstand
- bₐ, b_{E}, b_{N}, b_{QR}, B_{UR}: Breite
- h: Hilfslinie
- L: Linie (seitlicher Rand der Bodenaufstandsfläche)
- m_{ME}: Mikroeinschnittmittellinie
- m_{N}: Nutmittellinie
- m_{QR}: Rillenmittellinie
- t_{N}: Tiefe
- t_{E}, t_{QR}: maximale Tiefe
- T_{UR}: Profiltiefe
- Z₂: Detail
- α, β, γ, δ, ε, η, θ, λ, µ: Winkel

## Patentansprüche

1. Fahrzeugluftreifen mit einem Laufstreifen mit zumindest einer schulterseitigen Profilrippe (1), welche durch eine auf Profiltiefe (T_{UR}) ausgeführte schulterseitige Umfangsrille (4) begrenzt ist und sich aus einem innerhalb der Bodenaufstandsfläche verlaufenden Innenabschnitt (1a) und einen außerhalb der Bodenaufstandsfläche verlaufenden Außenabschnitt (1b) zusammensetzt,
wobei in der schulterseitigen Profilrippe (1) zumindest Großteils im Außenabschnitt (1b) verlaufende Querrillen (5) mit einer in Umfangsrichtung ermittelten maximalen Breite (b_{QR}) von 2,0 mm bis 10,0 mm ausgebildet sind,
wobei im Innenabschnitt (1a) eine in Draufsicht gerade sowie in Umfangsrichtung umlaufende Umfangsnut (6) mit einer Breite (b_{N}) von 0,5 mm bis 5,0 mm verläuft und
wobei im Bereich zwischen in Umfangsrichtung benachbarten Querrillen (5) jeweils ein in die Umfangsnut (6) einmündender Einschnitt (7) mit einer Breite (b_{E}) von 0,4 mm bis 2,0 mm verläuft,
**dadurch gekenzeichnet,**
dass die Einschnitte (7) eine maximale Tiefe von 70 % bis 100 % der Profiltiefe (T_{UR}) aufweisen, wobei zwischen jedem Einschnitt (7) und einer benachbarten Querrille (5) jeweils ein in Draufsicht zur Umfangsrichtung unter einem Winkel (λ) von 5° bis 20° verlaufender Mikroeinschnitt (9) mit einer Tiefe von 0,5 mm bis 50 % der Profiltiefe (T_{UR}) und einer Breite (b_{E}) von 0,4 mm bis 2,0 mm ausgebildet ist, wobei sich die Enden des Mikroeinschnitts (9) innerhalb eines quer zur Umfangsrichtung ermittelten Abstandes (a_{ME}) von bis zu 10,0 mm vom seitlichen Rand (L) der Bodenaufstandsfläche befinden.

2. Fahrzeugluftreifen nach Anspruch 1, **dadurch gekenzeichnet,**
dass zu den Mikroeinschnitten (9) Mikroeinschnitte (9) gehören, welche abschnittsweise im Innenabschnitt (1a) und abschnittsweise im Außenabschnitt (1b) verlaufen.

3. Fahrzeugluftreifen nach Anspruch 2, **dadurch gekenzeichnet,**
dass zu den Mikroeinschnitten (9) Mikroeinschnitte (9) gehören, welche im Innenabschnitt (1a) an die Querrille (5) und im Außenabschnitt (1b) an den Einschnitt (7) anschließen.

4. Fahrzeugluftreifen nach Anspruch 2 oder 3, **dadurch gekenzeichnet,** dass zu den Mikroeinschnitten (9) Mikroeinschnitte (9) gehören, welche im Innenabschnitt (1a) an den Einschnitt (7) und im Außenabschnitt (1b) an die Querrille (5) anschließen.

5. Fahrzeugluftreifen nach einem der Ansprüche 1 bis 4, **dadurch gekenzeichnet,** dass zu den Mikroeinschnitten (9) Mikroeinschnitte (9) gehören, welche ausschließlich im Innenabschnitt (1a) oder ausschließlich im Außenabschnitt (1b) verlaufen.

6. Fahrzeugluftreifen nach einem der Ansprüche 1 bis 5, **dadurch gekenzeichnet,** dass der Winkel (λ), unter welchem die Mikroeinschnitte (9) in Draufsicht zur Umfangsrichtung verlaufen, 10° bis 15° beträgt.

7. Fahrzeugluftreifen nach einem der Ansprüche 1 bis 6, **dadurch gekenzeichnet,** dass die Mikroeinschnitte (9), betrachtet in Draufsicht auf den Laufstreifen mit waagrecht ausgerichteter Reifenachse, rechtssteigend verlaufen.

8. Fahrzeugluftreifen nach einem der Ansprüche 1 bis 7, **dadurch gekenzeichnet,** dass zu den Mikroeinschnitten (9) Mikroeinschnitte (9) gehören, welche in Draufsicht betrachtet, gerade verlaufen.

9. Fahrzeugluftreifen nach einem der Ansprüche 1 bis 8, **dadurch gekenzeichnet,** dass die Tiefe der Mikroeinschnitte (9) 0,7 mm bis 2,0 mm, insbesondere 0,8 mm bis 1,2 mm, beträgt und/oder dass die Breite (b_{E}) der Mikroeinschnitte (9) 0,8 mm bis 1,2 mm beträgt.

10. Fahrzeugluftreifen nach einem der Ansprüche 1 bis 9, **dadurch gekenzeichnet,** dass weitere, insbesondere gerade verlaufende, Mikroeinschnitte (8) mit einer Tiefe von 2,0 mm bis 4,0 mm und einer Breite (b_{E}) von 0,4 mm bis 2,0 mm, insbesondere von 0,8 mm bis 1,2 mm, vorgesehen sind, welche zwischen der Umfangsnut (6) und der schulterseitigen Umfangsrille (4) verlaufen, wobei die Mikroeinschnitte (8) gegenüberliegend zu den Einschnitten (7) in die Zusatznut (6) einmünden und vorzugsweise in geradliniger Verlängerung der Einschnitte (7) verlaufen.

11. Fahrzeugluftreifen nach einem der Ansprüche 1 bis 10, **dadurch gekenzeichnet,** dass die in der schulterseitigen Profilrippe (1) des Laufstreifens verlaufenden Querrillen (5) jeweils einen Rillengrund (5c) und eine laufstreifeninnenseitig an den Rillengrund (5c) anschließende und in Fortsetzung zu diesem zur Rippenaußenfläche (1c) verlaufende Endflanke (5f) aufweisen, wobei zwischen den Endflanken (5f) der Querrillen (5) und der Umfangsnut (6) verlaufende, weitere Einschnitte (10) mit einer Breite (b_{E}) von 0,4 mm bis 2,0 mm, insbesondere von 0,8 mm bis 1,2 mm, und einer maximalen Tiefe von 70 % bis 100 % der Profiltiefe (T_{UR}) verlaufen, wobei die Einschnitte (10), in Draufsicht betrachtet, zur Umfangsrichtung bevorzugt unter Winkel (µ) von 60° bis 80°, insbesondere von 65° bis 75°, verlaufen.

12. Fahrzeugluftreifen nach einem der Ansprüche 1 bis 11, **dadurch gekenzeichnet,** dass sich die Einschnitte (7), welche im Bereich zwischen in Umfangsrichtung benachbarten Querrillen (5) in die Umfangsnut (6) einmünden, in Draufsicht betrachtet, jeweils aus
- einem gerade, komplett innerhalb des Innenabschnittes (1a) sowie zur Umfangsrichtung unter einem Winkel (ε) von 60° bis 80°, insbesondere von 65° bis 75°, verlaufenden, innenseitigen Einschnittabschnitt (7a) und
- einem gerade, Großteils im Außenabschnitt (1b) sowie zur Umfangsrichtung unter einem Winkel (η) von 75° bis 90°, insbesondere von zumindest 80°, bevorzugt von zumindest 85°, verlaufenden, in den Innenabschnitt (1a) hineinragenden, außenseitigen Einschnittabschnitt (7b) zusammensetzen,
- wobei der außenseitigen Einschnittabschnitt (7b) bezüglich der Umfangsrichtung vorzugsweise gegensinnig zum innenseitigen Einschnittabschnitt (7a) geneigt ist
- und wobei die Mikroeinschnitte (9), welche zwischen einem Einschnitt (7) und einer benachbarten Querrille (5) ausgebildet sind, vorzugsweise in den außenseitigen Einschnittabschnitt (7b) einmünden.

13. Fahrzeugluftreifen nach Anspruch 12, **dadurch gekenzeichnet,** dass der innenseitige Einschnittabschnitt (7a) mit dem außenseitigen Einschnittabschnitt (7b) einen Winkel (θ) von 140° bis 170°, insbesondere von 155° bis 165°, einschließt, wobei dieser Winkel (θ) vorzugsweise an der dem Mikroeinschnitt (9) abgewandten Seite des Einschnittes (7) liegt.

14. Fahrzeugluftreifen nach Anspruch 12 oder 13, **dadurch gekenzeichnet,** dass der innenseitige Einschnittabschnitt (7a) vor dem seitlichen Rand der Bodenaufstandsfläche (Linie L) in einem axialer Richtung ermittelten Abstand (aₐ) von 0,5 mm bis 5,0 mm, insbesondere von bis zu 2,0 mm, endet.

15. Fahrzeugluftreifen nach einem der Ansprüche 1 bis 14, **dadurch gekenzeichnet,** dass die Einschnitte (7), welche im Bereich zwischen in Umfangsrichtung benachbarten Querrillen (5) in die Umfangsnut (6) einmünden, zu den Querrillen (5) jeweils einen in Umfangsrichtung als kleinstmöglichen Abstand ermittelten Abstand (a₂) von 40 % bis 60 %, insbesondere von 45 % bis 55 %, des zwischen den Querrillen (5) in Umfangsrichtung als kleinstmöglichen Abstand ermittelten Abstandes (a₁) aufweisen.

## Claims

1. Pneumatic vehicle tyre with a tread strip with at least one shoulder-side profile rib (1) which is delimited by a shoulder-side circumferential channel (4) configured at profile depth (T_{UR}) and comprises an inner portion (1a) running inside the contact patch, and an outer portion (1b) running outside the contact patch, transverse channels (5) which run in the shoulder-side profile rib (1) at least largely in the outer portion (1b) being configured with a maximum width (b_{QR}) determined in the circumferential direction of from 2.0 mm to 10.0 mm,
a circumferential groove (6) which, in a top view, runs around in a straight line and in the circumferential direction and has a width (b_{N}) of from 0.5 mm to 5.0 mm running in the inner portion (1a),
and
in each case one sipe (7) which opens into the circumferential groove (6) and has a depth (b_{E}) of from 0.4 mm to 2.0 mm running in the region between adjacent transverse channels (5) in the circumferential direction,
**characterized**
**in that** the sipes (7) have a maximum depth of from 70% to 100% of the profile depth (T_{UR}), in each case one micro-sipe (9) which runs at an angle (λ) of from 5° to 20° with respect to the circumferential direction in a top view and which has a depth of from 0.5 mm to 50% of the profile depth (T_{UR}) and a width (b_{E}) of from 0.4 mm to 2.0 mm being configured between each sipe (7) and an adjacent transverse channel (5), the ends of the micro-sipe (9) being situated within a spacing (a_{ME}), determined transversely with respect to the circumferential direction, of up to 10.0 mm from the lateral edge (L) of the contact patch.

2. Pneumatic vehicle tyre according to Claim 1, **characterized in that** micro-sipes (9), portions of which run in the inner portion (1a) and portions of which run in the outer portion (1b), belong to the micro-sipes (9).

3. Pneumatic vehicle tyre according to Claim 2, **characterized in that** micro-sipes (9), portions of which adjoin the transverse channel (5) in the inner portion (1a) and portions of which adjoin the sipe (7) in the outer portion (1b), belong to the micro-sipes (9).

4. Pneumatic vehicle tyre according to Claim 2 or 3, **characterized in that** micro-sipes (9), portions of which adjoin the sipe (7) in the inner portion (1a) and portions of which adjoin the transverse channel (5) in the outer portion (1b), belong to the micro-sipes (9).

5. Pneumatic vehicle tyre according to one of Claims 1 to 4, **characterized in that** micro-sipes (9) which run exclusively in the inner portion (1a) or exclusively in the outer portion (1b) belong to the micro-sipes (9).

6. Pneumatic vehicle tyre according to one of Claims 1 to 5, **characterized in that** the angle (λ), at which the micro-sipes (9) run with respect to the circumferential direction in a top view, is from 10° to 15°.

7. Pneumatic vehicle tyre according to one of Claims 1 to 6, **characterized in that** the micro-sipes (9) run with a right-hand pitch, as viewed in a top view of the tread strip with a horizontally oriented tyre axis.

8. Pneumatic vehicle tyre according to one of Claims 1 to 7, **characterized in that** micro-sipes (9) which run in a straight line as viewed in a top view belong to the micro-sipes (9).

9. Pneumatic vehicle tyre according to one of Claims 1 to 8, **characterized in that** the depth of the micro-sipes (9) is from 0.7 mm to 2.0 mm, in particular from 0.8 mm to 1.2 mm, and/or **in that** the width (b_{E}) of the micro-sipes (9) is from 0.8 mm to 1.2 mm.

10. Pneumatic vehicle tyre according to one of Claims 1 to 9, **characterized in that** further micro-sipes (8), in particular running in a straight line, with a depth of from 2.0 mm to 4.0 mm and a width (b_{E}) of from 0.4 mm to 2.0 mm, in particular of from 0.8 mm to 1.2 mm, are provided which run between the circumferential groove (6) and the shoulder-side circumferential channel (4), the micro-sipes (8) opening into the additional groove (6) in a manner which lies opposite the sipes (7) and preferably running in a rectilinear extension of the sipes (7).

11. Pneumatic vehicle tyre according to one of Claims 1 to 10, **characterized in that** the transverse channels (5) which run in the shoulder-side profile rib (1) of the tread strip each have a channel bottom (5c) and an end flank (5f) which adjoins the channel bottom (5c) on the tread strip inner side and runs in a continuation thereof to the rib outer surface (1c), further sipes (10) which run between the end flanks (5f) of the transverse channels (5) and the circumferential groove (6) running with a width (b_{E}) of from 0.4 mm to 2.0 mm, in particular of from 0.8 mm to 1.2 mm, and a maximum depth of from 70% to 100% of the profile depth (T_{UR}), the sipes (10) preferably running at an angle (µ) of from 60° to 80°, in particular of from 65° to 75°, with respect to the circumferential direction, as viewed in a top view.

12. Pneumatic vehicle tyre according to one of Claims 1 to 11, **characterized in that** the sipes (7) which open into the circumferential groove (6) in the region between adjacent transverse channels (5) in the circumferential direction each comprise, as viewed in a top view,
- an inner-side sipe portion (7a) which runs in a straight line, completely within the inner portion (1a), and at an angle (ε) of from 60° to 80°, in particular of from 65° to 75°, with respect to the circumferential direction, and
- an outer-side sipe portion (7b) which runs in a straight line, largely in the outer portion (1b) and at an angle (η) of from 75° to 90°, in particular of at least 80°, preferably of at least 85°, with respect to the circumferential direction, and protrudes into the inner portion (1a),
- the outer-side sipe portion (7b) being inclined with regard to the circumferential direction preferably in the opposite direction to the inner-side sipe portion (7a),
- and the micro-sipes (9) which are configured between a sipe (7) and an adjacent transverse channel (5) preferably opening into the outer-side sipe portion (7b).

13. Pneumatic vehicle tyre according to Claim 12, **characterized in that** the inner-side sipe portion (7a) encloses an angle (θ) of from 140° to 170°, in particular of from 155° to 165°, with the outer-side sipe portion (7b), this angle (θ) preferably lying on that side of the sipe (7) which faces away from the micro-sipe (9).

14. Pneumatic vehicle tyre according to Claim 12 or 13, **characterized in that** the inner-side sipe portion (7a) ends before the lateral edge of the contact patch (line L) at a spacing (aₐ) determined in the axial direction of from 0.5 mm to 5.0 mm, in particular of up to 2.0 mm.

15. Pneumatic vehicle tyre according to one of Claims 1 to 14, **characterized in that** the sipes (7) which open into the circumferential groove (6) in the region between transverse channels (5) which are adjacent in the circumferential direction are each at a spacing (a₂) from the transverse channels (5), determined in the circumferential direction as the smallest possible spacing, of from 40% to 60%, in particular of from 45% to 55%, of the spacing (a₁) determined as the smallest possible spacing in the circumferential direction between the transverse channels (5).

## Revendications

1. Pneumatique de véhicule avec une bande de roulement avec au moins une nervure de profil (1) côté épaulement, qui est délimitée par une rainure périphérique (4) côté épaulement réalisée à la profondeur de profil (T_{UR}) et qui se compose d'une section intérieure (1a) s'étendant à l'intérieur de la surface de contact avec le sol et d'une section extérieure (1b) s'étendant à l'extérieur de la surface de contact avec le sol,
des rainures transversales (5) s'étendant au moins en grande partie dans la section extérieure (1b) étant réalisées dans la nervure de profil (1) côté épaulement, avec une largeur maximale (b_{QR}), déterminée dans la direction périphérique, de 2,0 mm à 10,0 mm,
une gorge périphérique (6) droite en vue de dessus et faisant le tour dans la direction périphérique, avec une largeur (b_{N}) de 0,5 mm à 5,0 mm, s'étendant dans la section intérieure (1a)
et
une entaille (7) d'une largeur (bε) de 0,4 mm à 2,0 mm, débouchant dans la gorge périphérique (6), s'étendant respectivement dans la zone entre des rainures transversales (5) voisines dans la direction périphérique,
**caractérisé en ce que**
les entailles (7) présentent une profondeur maximale de 70 % à 100 % de la profondeur de profil (T_{UR}), une micro-entaille (9) s'étendant en vue de dessus par rapport à la direction périphérique selon un angle (λ) de 5° à 20°, avec une profondeur de 0,5 mm à 50 % de la profondeur de profil (T_{UR}) et une largeur (bε) de 0,4 mm à 2,0 mm étant réalisée entre chaque entaille (7) et une rainure transversale voisine (5), les extrémités de la micro-entaille (9) se trouvant à l'intérieur d'une distance (a_{ME}) déterminée transversalement à la direction périphérique de jusqu'à 10,0 mm du bord latéral (L) de la surface de contact avec le sol.

2. Pneumatique de véhicule selon la revendication 1, **caractérisé en ce que** les micro-entailles (9) comprennent des micro-entailles (9) qui s'étendent par sections dans la section intérieure (1a) et par sections dans la section extérieure (1b).

3. Pneumatique de véhicule selon la revendication 2, **caractérisé en ce que** les micro-entailles (9) comprennent des micro-entailles (9) qui se raccordent à la rainure transversale (5) dans la section intérieure (1a) et à l'entaille (7) dans la section extérieure (1b).

4. Pneumatique pour véhicule selon la revendication 2 ou 3, **caractérisé en ce que** les micro-entailles (9) comprennent des micro-entailles (9) qui se raccordent à l'entaille (7) dans la section intérieure (1a) et à la rainure transversale (5) dans la section extérieure (1b).

5. Pneumatique de véhicule selon l'une quelconque des revendications 1 à 4, **caractérisé en ce que** les micro-entailles (9) comprennent des micro-entailles (9) qui s'étendent exclusivement dans la section intérieure (1a) ou exclusivement dans la section extérieure (1b).

6. Pneumatique de véhicule selon l'une quelconque des revendications 1 à 5, **caractérisé en ce que** l'angle (λ) selon lequel les micro-entailles (9) s'étendent en vue de dessus par rapport à la direction périphérique est de 10° à 15°.

7. Pneumatique de véhicule selon l'une quelconque des revendications 1 à 6, **caractérisé en ce que** les micro-entailles (9), vues de dessus de la bande de roulement avec l'axe de pneu orienté horizontalement, s'étendent vers la droite.

8. Pneumatique de véhicule selon l'une quelconque des revendications 1 à 7, **caractérisé en ce que** les micro-entailles (9) comprennent des micro-entailles (9) qui s'étendent sous forme droite lorsqu'elles sont vues de dessus.

9. Pneumatique de véhicule selon l'une quelconque des revendications 1 à 8, **caractérisé en ce que** la profondeur des micro-entailles (9) est de 0,7 mm à 2,0 mm, notamment de 0,8 mm à 1,2 mm, et/ou **en ce que** la largeur (bε) des micro-entailles (9) est de 0,8 mm à 1,2 mm.

10. Pneumatique de véhicule selon l'une quelconque des revendications 1 à 9, **caractérisé en ce qu'**il est prévu d'autres micro-entailles (8), notamment s'étendant sous forme droite, d'une profondeur de 2,0 mm à 4,0 mm et d'une largeur (bε) de 0,4 mm à 2,0 mm, notamment de 0,8 mm à 1,2 mm, qui s'étendent entre la gorge périphérique (6) et la rainure périphérique (4) côté épaulement, les micro-entailles (8) débouchant dans la gorge supplémentaire (6) à l'opposé des entailles (7) et s'étendant de préférence dans le prolongement rectiligne des entailles (7).

11. Pneumatique de véhicule selon l'une quelconque des revendications 1 à 10, **caractérisé en ce que** les rainures transversales (5) s'étendant dans la nervure de profil (1) côté épaulement de la bande de roulement présentent chacune un fond de rainure (5c) et un flanc d'extrémité (5f) se raccordant au fond de rainure (5c) côté intérieur de la bande de roulement et s'étendant dans le prolongement de celui-ci vers la surface extérieure de nervure (1c), d'autres entailles (10) s'étendant entre les flancs d'extrémité (5f) des rainures transversales (5) et la gorge périphérique (6), avec une largeur (bε) de 0,4 mm à 2,0 mm, notamment de 0,8 mm à 1,2 mm, et une profondeur maximale de 70 % à 100 % de la profondeur de profil (T_{UR}), les entailles (10), vues de dessus, s'étendant par rapport à la direction périphérique de préférence selon un angle (µ) de 60° à 80°, notamment de 65° à 75°.

12. Pneumatique de véhicule selon l'une quelconque des revendications 1 à 11, **caractérisé en ce que** les entailles (7) qui débouchent dans la gorge périphérique (6) dans la zone entre des rainures transversales (5) voisines dans la direction périphérique se composent chacune, en vue de dessus,
- d'une section d'entaille intérieure droite (7a) s'étendant complètement à l'intérieur de la section intérieure (1a) et selon un angle (ε) de 60° à 80°, notamment de 65° à 75°, par rapport à la direction périphérique, et
- d'une section d'entaille extérieure droite (7b), s'étendant en grande partie dans la section extérieure (1b) ainsi que par rapport à la direction périphérique selon un angle (η) de 75° à 90°, notamment d'au moins 80°, de préférence d'au moins 85°, pénétrant dans la section intérieure (1a),
- la section d'entaille (7b) côté extérieur étant inclinée par rapport à la direction périphérique, de préférence en sens inverse de la section d'entaille (7a) côté intérieur
- et les micro-entailles (9), qui sont réalisées entre une entaille (7) et une rainure transversale voisine (5), débouchant de préférence dans la section d'entaille (7b) du côté extérieur.

13. Pneumatique de véhicule selon la revendication 12, **caractérisé en ce que** la section d'entaille côté intérieur (7a) forme avec la section d'entaille côté extérieur (7b) un angle (θ) de 140° à 170°, notamment de 155° à 165°, cet angle (θ) étant de préférence situé du côté de l'entaille (7) détourné de la micro-entaille (9).

14. Pneumatique de véhicule selon la revendication 12 ou 13, **caractérisé en ce que** la section d'entaille intérieure (7a) se termine avant le bord latéral de la surface de contact avec le sol (ligne L) à une distance (aₐ) déterminée dans la direction axiale de 0,5 mm à 5,0 mm, notamment de jusqu'à 2,0 mm.

15. Pneumatique de véhicule selon l'une quelconque des revendications 1 à 14, **caractérisé en ce que** les entailles (7) qui débouchent dans la gorge périphérique (6) dans la zone entre des rainures transversales (5) voisines dans la direction périphérique présentent chacune par rapport aux rainures transversales (5) une distance (a₂) déterminée dans la direction périphérique comme étant la plus petite distance possible de 40 % à 60 %, notamment de 45 % à 55 %, de la distance (a₁) déterminée entre les rainures transversales (5) dans la direction périphérique comme étant la plus petite distance possible.
